(19) Europäisches Patentamt / European Patent Office / Office européen des brevets

(11) **EP 4 786 642 A1**

(12) **EUROPEAN PATENT APPLICATION**
published in accordance with Art. 153(4) EPC

(43) Date of publication:
**05.08.2026 Bulletin 2026/32**

(21) Application number: **24872383.5**

(22) Date of filing: **26.09.2024**

(51) International Patent Classification (IPC):
*C23C 26/00* (2006.01)    *B32B 7/025* (2019.01)
*B32B 15/08* (2006.01)    *H01F 1/147* (2006.01)
*H01F 27/245* (2006.01)    *H01F 41/02* (2006.01)
*H02K 1/18* (2006.01)    *C21D 8/12* (2026.01)

(52) Cooperative Patent Classification (CPC):
**B32B 7/025; B32B 15/08; C23C 26/00; H01F 1/147; H01F 27/245; H01F 41/02; H02K 1/18; C21D 8/12**

(86) International application number:
**PCT/JP2024/034404**

(87) International publication number:
**WO 2025/070598 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023163617**

(71) Applicants:
• **Nippon Steel Corporation**
  **Tokyo 100-8071 (JP)**
• **Nippon Carbide Industries Co., Inc.**
  **Tokyo 108-8466 (JP)**

(72) Inventors:
• **TAKEDA Kazutoshi**
  **Tokyo 100-8071 (JP)**
• **FUKUCHI Minako**
  **Tokyo 100-8071 (JP)**
• **TAKATANI Shinsuke**
  **Tokyo 100-8071 (JP)**
• **OGAWA Hiroaki**
  **Namerikawa-shi, Toyama 936-8555 (JP)**
• **FUKUDA Tatsuki**
  **Namerikawa-shi, Toyama 936-8555 (JP)**

(74) Representative: **Vossius & Partner**
  **Patentanwälte Rechtsanwälte mbB**
  **Siebertstraße 3**
  **81675 München (DE)**

(54) **ELECTROMAGNETIC STEEL SHEET WITH ADHESIVE COATING FILM, LAMINATED CORE, AND MANUFACTURING METHODS FOR THOSE PRODUCTS**

(57)    This adhesive surface-coated electrical steel sheet includes an electrical steel sheet and an adhesive coating provided on at least a part of one surface or both surfaces of the electrical steel sheet. The adhesive coating includes a (meth)acrylic resin particle A containing a configurational unit derived from a monomer having a self-crosslinking group, and a water-soluble (meth)acrylic resin B, and a gel fraction of the adhesive coating is more than 20 mass% and 70 mass% or less.

FIG. 1

**Description**

TECHNICAL FIELD

The present disclosure relates to an adhesive surface-coated electrical steel sheet, a laminated core, and methods for manufacturing those.

The present application claims priority based on Japanese Patent Application No. 2023-163617 filed in Japan on September 26, 2023, the contents of which are incorporated herein by reference.

BACKGROUND ART

Conventionally, a "laminated core" in which a plurality of electrical steel sheets are laminated to each other has been used as a core used in a rotary electric machine and the like. The plurality of electrical steel sheets are fixed by methods such as welding, swaging, bolting, or bonding.

However, when the plurality of electrical steel sheets are fixed by the methods such as welding, swaging, or bolting, mechanical stress, thermal stress, interlayer short-circuiting, and the like are likely to occur during processing. Therefore, the magnetic characteristics of the electrical steel sheet deteriorate, and the performance of the laminated core is unlikely to be sufficiently exhibited.

On the other hand, when the plurality of electrical steel sheets are fixed by bonding, adhesive surface-coated electrical steel sheets are used, and adhesive coatings are cured through heating and pressing to develop adhesiveness, thereby bonding the plurality of electrical steel sheets to each other.

When the plurality of electrical steel sheets are fixed using the adhesive surface-coated electrical steel sheets, mechanical stress, thermal stress, interlayer short-circuiting, and the like are less likely to occur during the processing. Therefore, the magnetic characteristics of the electrical steel sheet are less likely to deteriorate, and the performance of the laminated core is likely to be sufficiently exhibited.

In view of such advantageous effects, various technologies have been studied for fixing the plurality of electrical steel sheets by bonding.

For example, Patent Document 1 discloses "an adhesive surface-coated electrical steel sheet having, on a surface thereof, an insulating coating that develops adhesiveness through heating and/or pressing, the coating being a mixture in which an epoxy resin or a modified epoxy resin having a glass transition temperature (Tg) of 80°C to 150°C, an epoxy resin curing agent, and a particulate polymer having a particle size of 0.01 $\mu$m to 0.5 $\mu$m are dispersed".

In addition, Patent Document 2 discloses "an electrical steel sheet laminated body including a plurality of electrical steel sheets and a fusion-bonding layer positioned between the plurality of electrical steel sheets, in which the fusion-bonding layer contains a polyethylene acrylate including a repeating unit represented by Chemical Formula 1 and a repeating unit represented by Chemical Formula 2, and the polyethylene acrylate contains 65 to 90 weight% of the repeating unit represented by Chemical Formula 1 and 10 to 35 weight% of the repeating unit represented by Chemical Formula 2".

In addition, Patent Document 3 discloses "an electrical steel sheet for lamination, including an electrical steel sheet and an adhesive insulating coating provided on at least one surface of the electrical steel sheet, the adhesive insulating coating having a Martens hardness (HM) of 50 or more and less than 500".

In addition, Patent Document 4 discloses "an electrical steel strip or electrical steel sheet provided, on one planar surface thereof, with at least one thermosetting baking enamel layer including an epoxy resin as a main component, at least one curing agent, and at least one filler, in which the filler of the baking enamel layer contains a metal carbonate, a metal sulfate, a metal sulfide, a metal silicate, or a metal phosphate, or any mixture composed of a plurality thereof".

In addition, Patent Document 5 discloses "an electrical steel sheet with an insulating coating, having a heat-resistant adhesive insulating coating on one or both surfaces of the electrical steel sheet, in which the heat-resistant adhesive insulating coating contains 10 mass% or more of a polycarbonate urethane resin having a softening point of 20°C to 200°C, and 10 to 1000 parts by mass of a phenol resin with respect to 100 parts by mass of the polycarbonate urethane resin".

Citation List

Patent Documents

[0013]

　　Patent Document 1: PCT International Publication No. WO2004/070080
　　Patent Document 2: Published Japanese Translation No. 2023-508140 of the PCT International Publication

Patent Document 3: PCT International Publication No. WO2016/017132
Patent Document 4: Published Japanese Translation No. 2018-518591 of the PCT International Publication
Patent Document 5: Japanese Unexamined Patent Application, First Publication No. 2017-179233

SUMMARY OF INVENTION

Technical Problem

However, in the prior arts including Patent Documents 1 to 5, a phenomenon has occurred in which the magnetic characteristics of the electrical steel sheet deteriorate when the adhesion strength of the adhesive coating is increased. That is, the adhesion strength of the adhesive coating and the magnetic characteristics of the electrical steel sheet are in a trade-off relationship, and it is difficult to satisfy both. In particular, it is required to ensure the adhesion strength of the adhesive surface-coated electrical steel sheet at ambient temperature and a high temperature, and to ensure the adhesion strength even after the adhesive surface-coated electrical steel sheet is stored at a high temperature.

Therefore, in the adhesive surface-coated electrical steel sheet, further improvements are desired in terms of the adhesion strength at ambient temperature and a high temperature, the adhesion strength after high-temperature storage, and the magnetic characteristics.

An object of the present disclosure is to provide an adhesive surface-coated electrical steel sheet having excellent adhesion strength at ambient temperature and a high temperature, excellent adhesion strength after high-temperature storage, and excellent magnetic characteristics, a laminated core using the same, and methods for manufacturing those.

Solution to Problem

Specific means for solving the problem include the following aspects.

<1> An adhesive surface-coated electrical steel sheet according to an aspect of the present disclosure, including: an electrical steel sheet; and an adhesive coating provided on at least a part of one surface or both surfaces of the electrical steel sheet,

in which
the adhesive coating includes
a (meth)acrylic resin particle A containing a configurational unit derived from a monomer having a self-crosslinking group, and a water-soluble (meth)acrylic resin B, and
a gel fraction of the adhesive coating is more than 20 mass% and 70 mass% or less.

<2> In the adhesive surface-coated electrical steel sheet according to <1>, the water-soluble (meth)acrylic resin B may be a (meth)acrylic resin containing a configurational unit derived from a monomer having a self-crosslinking group.

<3> In the adhesive surface-coated electrical steel sheet according to <1> or <2>, the ratio of the mass of the (meth)acrylic resin particle A to the mass of the water-soluble (meth)acrylic resin B may be 95/5 to 85/15.

<4> In the adhesive surface-coated electrical steel sheet according to <1> to <3>, the self-crosslinking group may be one or more of an N-methylol group, an N-butylol group, a glycidyl group, and an alkoxymethylamide group.

<5> A laminated core according to an aspect of the present disclosure, including a plurality of the adhesive surface-coated electrical steel sheets according to any of <1> to <4>, the adhesive surface-coated electrical steel sheets being laminated, in which the electrical steel sheets are bonded to each other by a cured film of the adhesive coating.

<6> In the laminated core according to <5>, the adhesive coating may include the (meth)acrylic resin particle A containing a configurational unit derived from a monomer having a (meth)acrylamide group as the monomer having a self-crosslinking group and the water-soluble (meth)acrylic resin B containing a configurational unit derived from a monomer having a hydroxy group, and a gel fraction of the cured film of the adhesive coating may be 70 mass% or more.

<7> A method for manufacturing an adhesive surface-coated electrical steel sheet according to an aspect of the present disclosure is a method for manufacturing the adhesive surface-coated electrical steel sheet according to <1>, the method including:

a coating step of coating at least a part of one surface or both surfaces of an electrical steel sheet with an adhesive coating-forming coating liquid containing a (meth)acrylic resin particle A containing a configurational unit derived from a monomer having a self-crosslinking group and a water-soluble (meth)acrylic resin B to obtain a coated steel sheet; and

a coating film-forming step of heating the coated steel sheet to a drying temperature of 100°C to 200°C at a heating rate of 6.0°C/sec or less, retaining the coated steel sheet within a temperature range between -10°C from the drying temperature and the drying temperature for 10 to 60 seconds, and drying the coated steel sheet, to form an adhesive coating on the one surface or each of the both surfaces of the electrical steel sheet.

<8> In the method for manufacturing an adhesive surface-coated electrical steel sheet according to <7>, in the adhesive coating-forming coating liquid, the ratio of the mass of the (meth)acrylic resin particle A to the mass of the water-soluble (meth)acrylic resin B may be 95/5 to 85/15.

<9> A method for manufacturing a laminated core according to an aspect of the present disclosure is a method for manufacturing the laminated core according to <5>, the method including:

a punching step of punching the adhesive surface-coated electrical steel sheet to obtain a blanking member;

a laminating step of laminating a plurality of the blanking members to obtain a laminated body; and

a bonding step of heating the laminated body to a pressurizing temperature within a temperature range of 200°C to 300°C, retaining the laminated body within a range between -10°C from the pressurizing temperature and the pressurizing temperature for 30 to 60 minutes while applying a pressurizing force of 0.5 to 10 MPa, and curing the adhesive coating, to form the cured film.

Advantageous Effects of Invention

According to the above-described aspects of the present disclosure, provided are the adhesive surface-coated electrical steel sheet having excellent adhesion strength at ambient temperature and a high temperature, excellent adhesion strength after high-temperature storage, and excellent magnetic characteristics, the laminated core using the same, and the methods for manufacturing those.

BRIEF DESCRIPTION OF DRAWINGS

[FIG. 1] A schematic diagram illustrating an example of an adhesive surface-coated electrical steel sheet according to the present disclosure.
[FIG. 2] A schematic diagram illustrating an example of a laminated core of the present disclosure.

DESCRIPTION OF EMBODIMENTS

Hereinafter, the present disclosure will be described.
Although the description of the requirements described below may be made based on representative embodiments of the present disclosure, the present disclosure is not limited to such embodiments and can be implemented with appropriate modifications within the scope of the object of the present disclosure.
In the present disclosure, a numerical value range indicated by using "to" means a range including the numerical values described before and after "to" as a lower limit and an upper limit, respectively.
In the numerical value ranges described in a stepwise manner in the present disclosure, an upper limit or a lower limit described in a certain numerical value range may be replaced with an upper limit or a lower limit of another stepwise-described numerical value range. In addition, in the numerical value ranges described in the present disclosure, the upper or lower limit described in a certain numerical value range may be replaced with a value indicated in Examples.
In the present disclosure, a combination of two or more preferable aspects is a more preferable aspect.
In the present disclosure, in a case where a plurality of substances corresponding to components are present in a coating composition for a laminated steel sheet, the amount of each component in the coating composition for a laminated steel sheet means the total amount of the plurality of substances present in the coating composition for a laminated steel sheet, unless otherwise specified.
In the present disclosure, "(meth)acrylic monomer" means a monomer having a (meth)acryloyl group.
In the present disclosure, "(meth)acrylic resin" means a resin that contains a configurational unit derived from a (meth)acrylic monomer, with a proportion of the configurational unit derived from the (meth)acrylic monomer being 50 mass% or more.
In the present disclosure, "(meth)acrylic" is a term encompassing both "acrylic" and "methacrylic", "(meth)acrylate" is a term encompassing both "acrylate" and "methacrylate", "(meth)acryloyl" is a term encompassing both "acryloyl" and "methacryloyl", and "(meth)acrylamide" is a term encompassing both "acrylamide" and "methacrylamide".

In the present disclosure, "n-" means normal, "i-" means iso, "s-" means secondary, and "t-" means tertiary.

In the present disclosure, "mass%" and "weight%" are synonymous, and "part(s) by mass" and "part(s) by weight" are synonymous.

In the present disclosure, the term "step" includes not only an independent step but also a step that cannot be clearly distinguished from other steps as long as an intended purpose of the step can be achieved.

[Adhesive Surface-Coated Electrical Steel Sheet]

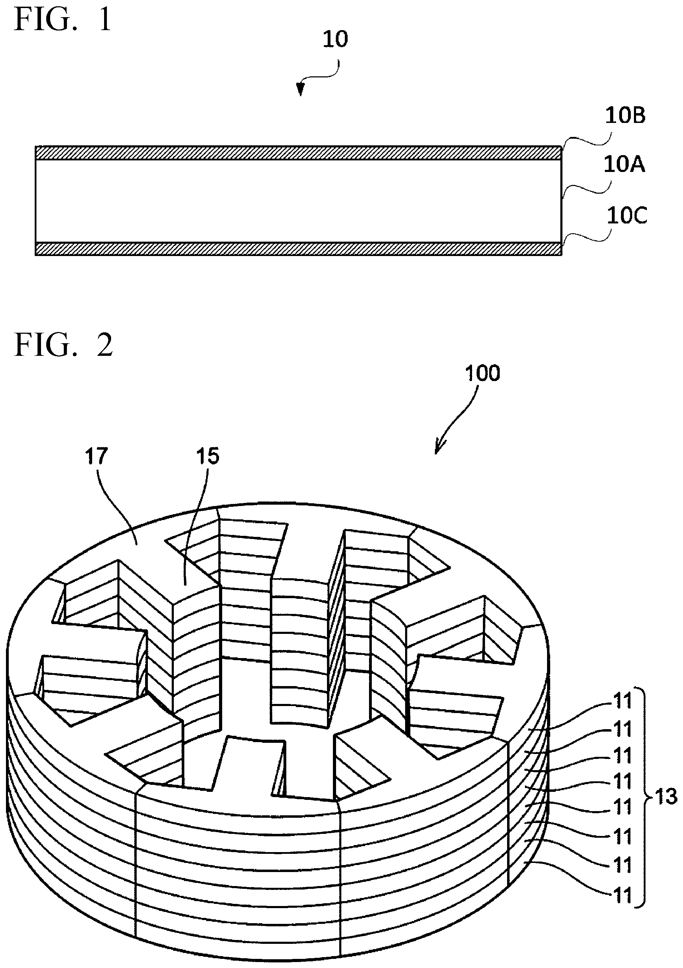

An adhesive surface-coated electrical steel sheet (an electrical steel sheet with adhesive coating, an adhesive-coated electrical steel sheet) of the present disclosure includes an electrical steel sheet and an adhesive coating provided on at least a part of one surface or both surfaces of the electrical steel sheet (see FIG. 1).

The adhesive coating contains a (meth)acrylic resin particle A including a configurational unit derived from a monomer having a self-crosslinking group, and a water-soluble (meth)acrylic resin B, which are derived from an adhesive coating-forming coating liquid.

A gel fraction of the adhesive coating is more than 20 mass% and 70 mass% or less.

Here, in FIG. 1, 10 denotes an adhesive surface-coated electrical steel sheet, 10A denotes an electrical steel sheet, and 10B and 10C denote adhesive coatings.

According to the above-described configuration, the adhesive surface-coated electrical steel sheet of the present disclosure exhibits excellent adhesion strength at room temperature (ambient temperature) and a high temperature, excellent adhesion strength after high-temperature storage, and excellent magnetic characteristics (excellent magnetic characteristics as a laminated core). In the present disclosure, the "room temperature (ambient temperature)" refers to 25°C, and the "high temperature" refers to 150°C.

The reason is presumed as follows. Since an acrylic resin has a main chain composed of carbon-carbon bonds, the acrylic resin is chemically stable. Furthermore, setting the gel fraction of the adhesive coating within a specific range ensures adhesion strength after high-temperature storage. In addition, the (meth)acrylic resin particle A having a self-crosslinking group enhances adhesion strength from ambient temperature to a high temperature through the bonding of the self-crosslinking groups. It is presumed that, by incorporating the water-soluble acrylic resin B, the stress applied to the electrical steel sheet is evenly distributed across the adhesive interface, resulting in excellent magnetic characteristics.

Hereinafter, the adhesive surface-coated electrical steel sheet of the present disclosure will be described in detail.

(Electrical Steel Sheet)

The electrical steel sheet is a steel sheet on which the adhesive coating is to be formed, and is not particularly limited.

The electrical steel sheet may be a non-oriented electrical steel sheet or a grain-oriented electrical steel sheet.

Specifically, as the electrical steel sheet, for example, it is possible to use a non-oriented electrical steel strip as defined in JIS C 2552:2014, a grain-oriented electrical steel strip as defined in JIS C 2553:2019, or a non-oriented or grain-oriented thin electrical steel strip as defined in JIS C 2558:2021, each of which is cut to a predetermined length.

(Adhesive Coating)

The adhesive coating is provided on at least a part of one or both surfaces of the electrical steel sheet (see FIG. 1). That is, the adhesive coating may be provided, for example, over the entirety of one surface or each of both surfaces of the electrical steel sheet, or may be provided in a patterned manner, such as a staggered arrangement (an arrangement alternately shifted in the vertical and horizontal directions), on one surface or each of both surfaces of the electrical steel sheet.

However, the adhesive coating is preferably provided in an area of 60% or more, 80% or more, or 100% with respect to an area of one surface of the electrical steel sheet.

-Gel Fraction-

A gel fraction of the adhesive coating is more than 20 mass% and 70 mass% or less.

When the gel fraction of the adhesive coating is 20 mass% or less, sufficient adhesion strength after high-temperature storage cannot be secured. In addition, the appearance deteriorates.

When the gel fraction of the adhesive coating is more than 70 mass%, sufficient adhesion strength at a high temperature cannot be secured.

In addition, when the gel fraction of the adhesive coating is excessively increased, the adhesion strength is excessively high, the adhesive coating becomes too hard, and the magnetic characteristics deteriorate.

Therefore, the gel fraction of the adhesive coating is set within the above-described range. The gel fraction of the adhesive coating is preferably 30 mass% or more, and more preferably 40 mass% or more. The gel fraction of the adhesive coating is preferably 60 mass% or less, and more preferably 50 mass% or less.

The gel fraction of the adhesive coating is the ratio of a solvent-insoluble content measured using ethyl acetate as an extraction solvent. Specifically, the gel fraction of the adhesive coating is measured as follows.

First, the adhesive surface-coated electrical steel sheet is cut into a size of 60 mm × 60 mm to obtain two sample pieces.

Next, the adhesive coating film is removed from one sample piece. The sample piece from which the adhesive coating film is removed is defined as a sample X1, and the mass of the sample X1 is defined as A.

The other sample piece (that is, the sample piece with the adhesive coating) is defined as a sample X2, and the mass of the sample X2 is defined as B.

Next, the sample X2 is placed in a glass bottle containing 80 g of ethyl acetate, and the glass bottle is capped.

Next, the glass bottle containing the sample X2 is left to stand for 3 days in an environment at an atmosphere temperature of 23°C and 50% RH.

Next, the sample X2 is taken out from the glass bottle and washed using a small amount of ethyl acetate.

Next, the sample X2 is dried under the conditions of a drying temperature of 100°C and a drying time of 24 hours. The mass of the sample X2 after drying is accurately measured using a precision balance. This mass is defined as D (unit: g).

Next, the gel fraction is calculated by the following equation.

$$\text{Gel fraction [mass\%]} = (D - (B - A))/(B - A) \times 100$$

The gel fraction of the adhesive coating is adjusted, for example, by appropriately setting a heating temperature, a heating time, a cooling rate, and the like of the coating film when the adhesive coating is formed.

(Average Thickness of Adhesive Coating)

The average thickness of the adhesive coating is preferably 1.0 to 6.0 $\mu$m. The average thickness of the adhesive coating is more preferably 1.5 $\mu$m or more or 2.0 $\mu$m or more. In addition, the average thickness of the adhesive coating is more preferably 4.0 $\mu$m or less or 3.0 $\mu$m or less.

In the adhesive surface-coated electrical steel sheet according to the present disclosure, even in a case where the average thickness of the adhesive coating is reduced to 1.0 to 6.0 $\mu$m, the adhesion strength at ambient temperature and a high temperature, the adhesion strength after high-temperature storage, and the magnetic characteristics are all excellent.

The method for measuring the average thickness of the adhesive coating is as follows.

The adhesive surface-coated electrical steel sheet to be measured is cut along a thickness direction to obtain a test piece in which a cut surface is an observed section.

The observed section of the test piece is observed by a scanning electron microscope (SEM), and the thicknesses of the adhesive coating at any three locations are measured. Then, the average thickness of the adhesive coating is obtained by arithmetically averaging the thicknesses of the adhesive coating at the three locations. Note that the adhesive coating and the electrical steel sheet can be easily distinguished from each other by the difference in brightness; a layer existing at the center in the thickness direction is regarded as the electrical steel sheet, and layers existing on the front and back sides in the thickness direction are regarded as the adhesive coatings.

(Components of Adhesive Coating)

The adhesive coating contains a (meth)acrylic resin particle A (hereinafter, also referred to as a "specific (meth) acrylic resin particle A") containing a configurational unit derived from a monomer having a self-crosslinking group, and a water-soluble (meth)acrylic resin B.

The adhesive coating is an insulating coating film that develops adhesiveness by curing as a result of progress of crosslinking of at least the specific (meth)acrylic resin particle A through heating and pressing.

[Specific (Meth)Acrylic Resin Particle A]

The specific (meth)acrylic resin particle A contains a configurational unit derived from a monomer having a self-crosslinking group, and specifically, the specific (meth)acrylic resin particle A contains a configurational unit derived from a monomer having a carboxy group and a configurational unit derived from a monomer having a self-crosslinking group.

The adhesive coating may contain only one type of the specific (meth)acrylic resin particle A, or may contain two or more types thereof.

<Configurational Unit Derived From Monomer Having Carboxy Group>

The specific (meth)acrylic resin particle A preferably contains a configurational unit derived from a monomer having a carboxy group in a proportion of 1 mass% or more and less than 20 mass% with respect to all configurational units.

In the present disclosure, the "configurational unit derived from a monomer having a carboxy group" means a configurational unit formed by addition polymerization of a monomer having a carboxy group.

Examples of the monomer having a carboxy group include a monomer having at least one carboxy group and an ethylenically unsaturated group in one molecule.

The ethylenically unsaturated group is not particularly limited, and examples thereof include a vinyl group, an allyl group, a vinylphenyl group, a (meth)acrylamide group, and a (meth)acryloyl group.

The ethylenically unsaturated group is preferably a (meth)acryloyl group.

Specific examples of the monomer having a carboxy group include (meth)acrylic acid, crotonic acid, maleic acid, fumaric acid, itaconic acid, glutaconic acid, citraconic acid, $\omega$-carboxy-polycaprolactone mono(meth)acrylate [for example, $\omega$-carboxy-polycaprolactone (n $\approx$ 2) monoacrylate], and succinic acid derivatives (for example, 2-acryloyloxyethyl-succinic acid).

As the monomer having a carboxy group, a (meth)acrylic monomer having a carboxy group is preferable, (meth)acrylic acid is more preferable, and methacrylic acid is still more preferable.

The specific (meth)acrylic resin particle A may contain only one type of the configurational unit derived from a monomer having a carboxy group, or may contain two or more types thereof.

The amount of the configurational unit derived from a monomer having a carboxy group in the specific (meth)acrylic resin particle A is preferably 1 mass% or more and less than 20 mass% with respect to all configurational units of the specific (meth)acrylic resin particle A.

When the amount of the configurational unit derived from a monomer having a carboxy group in the specific (meth)acrylic resin particle A is 1 mass% or more with respect to all configurational units of the specific (meth)acrylic resin particle A, external appearance, adhesion strength, and magnetic characteristics all tend to be excellent. From such a viewpoint, the amount of the configurational unit derived from a monomer having a carboxy group in the specific (meth)acrylic resin particle A is preferably 3 mass% or more, more preferably 5 mass% or more, still more preferably 8 mass% or more, and particularly preferably 10 mass% or more with respect to all configurational units of the specific (meth)acrylic resin particle A.

<Configurational Unit Derived From Monomer Having Self-Crosslinking Group>

The specific (meth)acrylic resin particle A preferably contains a configurational unit derived from a monomer having a self-crosslinking group in a proportion of 0.1 mass% or more and 7 mass% or less with respect to all configurational units.

In the present disclosure, the "configurational unit derived from a monomer having a self-crosslinking group" means a configurational unit formed by addition polymerization of a monomer having a self-crosslinking group.

In the present disclosure, "self-crosslinkability" means a property of being capable of crosslinking even in the absence of a crosslinking agent.

The self-crosslinking group in the present disclosure can develop self-crosslinkability by heating.

The temperature at which the self-crosslinking group develops self-crosslinkability varies depending on the type of the self-crosslinking group.

The self-crosslinking group is only sufficient to develop self-crosslinkability at a temperature at which the electrical steel sheets are bonded to each other, and the temperature at which the self-crosslinking group develops self-crosslinkability is not particularly limited.

Specific examples of the self-crosslinking group include an N-methylol group, an N-butylol group, a glycidyl group, and an alkoxymethylamide group.

As the self-crosslinking group, at least one selected from the group consisting of an N-methylol group, an N-butylol group, and a glycidyl group is preferable.

Specific examples of the monomer having a self-crosslinking group include N-hydroxyalkyl (meth)acrylamide, N,N-dihydroxyalkyl (meth)acrylamide, glycidyl (meth)acrylate, and N-alkoxymethyl (meth)acrylamide.

Examples of the N-hydroxyalkyl (meth)acrylamide include N-methylol acrylamide (NMAM), N-butylol acrylamide (NBMA), and hydroxyethyl acrylamide (HEAA).

Examples of the N,N-dihydroxyalkyl (meth)acrylamide include dimethylol (meth)acrylamide.

Examples of the N-alkoxymethyl (meth)acrylamide include N-methoxymethyl (meth)acrylamide, N-ethoxymethyl (meth)acrylamide, and N-butoxymethyl (meth)acrylamide.

As the monomer having a self-crosslinking group, at least one selected from the group consisting of N-methylol acrylamide (NMAM), N-butylol acrylamide (NBMA), and hydroxyethyl acrylamide (HEAA) is preferable, and hydroxyethyl acrylamide (HEAA) is more preferable.

The specific (meth)acrylic resin particle A may contain only one type of the configurational unit derived from a monomer having a self-crosslinking group, or may contain two or more types thereof.

The amount of the configurational unit derived from a monomer having a self-crosslinking group in the specific (meth)acrylic resin particle A is preferably 0.1 mass% or more and 7 mass% or less with respect to all configurational units of the specific (meth)acrylic resin particle A.

In one embodiment, the amount of the configurational unit derived from a monomer having a self-crosslinking group in the specific (meth)acrylic resin particle A may be in a range of 0.1 mass% or more and 6 mass% or less, may be in a range of 0.1 mass% or more and 5 mass% or less, may be in a range of 1 mass% or more and 7 mass% or less, may be in a range of 1.5 mass% or more and 6 mass% or less, or may be in a range of 1.9 mass% or more and 5 mass% or less.

<Configurational Unit Derived From Alkyl (Meth)Acrylate Monomer>

The specific (meth)acrylic resin particle A preferably contains a configurational unit derived from an alkyl (meth) acrylate monomer.

In the present disclosure, the "configurational unit derived from an alkyl (meth)acrylate monomer" means a configurational unit formed by addition polymerization of an alkyl (meth)acrylate monomer. Note that the "alkyl (meth) acrylate monomer" in the specific (meth)acrylic resin particle A excludes a monomer corresponding to a monomer having a carboxy group and a monomer corresponding to a monomer having a self-crosslinking group.

The type of the alkyl (meth)acrylate monomer is not particularly limited.

The alkyl (meth)acrylate monomer may be an alkyl acrylate monomer or may be an alkyl methacrylate monomer.

The alkyl group of the alkyl (meth)acrylate monomer may be unsubstituted or may have a substituent (provided that a carboxy group, a self-crosslinking group, and a hydroxy group are excluded), and is preferably unsubstituted.

The alkyl group of the alkyl (meth)acrylate monomer may be any of linear, branched, or cyclic.

The number of carbon atoms of an alkyl group of the alkyl (meth)acrylate monomer is, for example, preferably 1 to 18, more preferably 1 to 12, and still more preferably 1 to 8.

Specific examples of the alkyl (meth)acrylate monomer include methyl (meth)acrylate, ethyl (meth)acrylate, n-butyl (meth)acrylate, i-butyl (meth)acrylate, s-butyl (meth)acrylate, t-butyl (meth)acrylate, n-octyl (meth)acrylate, i-octyl (meth)acrylate, 2-ethylhexyl (meth)acrylate, n-nonyl (meth)acrylate, i-nonyl (meth)acrylate, n-decyl (meth)acrylate, stearyl (meth)acrylate, lauryl (meth)acrylate, cyclohexyl (meth)acrylate, and isobornyl (meth)acrylate.

As the alkyl (meth)acrylate monomer, at least one selected from the group consisting of n-butyl acrylate, methyl methacrylate, and 2-ethylhexyl acrylate is preferable.

<Configurational Unit Derived From Other Monomer>

The specific (meth)acrylic resin particle A may contain a configurational unit derived from a monomer that does not correspond to any of a monomer having a carboxy group, a monomer having a self-crosslinking group, and an alkyl (meth)acrylate monomer (so-called "other monomer").

In the present disclosure, the "configurational unit derived from other monomer" means a configurational unit formed by addition polymerization of other monomer.

Examples of the configurational unit derived from other monomer include a configurational unit derived from styrene. When the specific (meth)acrylic resin particle A contains a configurational unit derived from styrene, glossiness can be imparted to the formed adhesive coating.

In addition, examples of the configurational unit derived from other monomer include a configurational unit derived from a (meth)acrylate having an aromatic ring typified by benzyl (meth)acrylate and phenoxyethyl (meth)acrylate; a configurational unit derived from an alkoxyalkyl (meth)acrylate typified by methoxyethyl (meth)acrylate and ethoxyethyl (meth)acrylate; a configurational unit derived from a vinyl cyanide typified by acrylonitrile and methacrylonitrile; and a configurational unit derived from a vinyl ester typified by vinyl formate, vinyl acetate, vinyl propionate, and vinyl versatate.

In a case of containing the configurational unit derived from other monomer, the specific (meth)acrylic resin particle A may contain only one type of the configurational unit derived from other monomer, or may contain two or more types thereof.

In the case where the specific (meth)acrylic resin particle A contains the configurational unit derived from other monomer, the amount of the configurational unit derived from other monomer can be appropriately set within a range that does not impair the effects of the coating composition of the present disclosure.

<<Amount of Specific (Meth)Acrylic Resin Particle A>>

The amount of the specific (meth)acrylic resin particle A is not particularly limited, and is, for example, preferably 85 to 95 mass%, more preferably 87 to 93 mass%, and still more preferably 89 to 91 mass% with respect to the adhesive coating.

[Water-Soluble (Meth)Acrylic Resin B]

The adhesive coating contains the water-soluble (meth)acrylic resin B.
The adhesive coating may contain only one type of the water-soluble (meth)acrylic resin B, or may contain two or more types thereof.
Here, the "water-soluble (meth)acrylic resin" is a (meth)acrylic resin having a solubility in water at 25°C of 50 mg or more per 100 g of water.

<Configurational Unit Derived From Monomer Having Self-Crosslinking Group>

The water-soluble (meth)acrylic resin B may contain a configurational unit derived from a monomer having a self-crosslinking group.
When the water-soluble (meth)acrylic resin B contains the configurational unit derived from a monomer having a self-crosslinking group, the adhesion strength at a high temperature tends to be excellent.
Note that the water-soluble (meth)acrylic resin B may not contain the configurational unit derived from a monomer having a self-crosslinking group. That is, the water-soluble (meth)acrylic resin B may be a non-crosslinkable resin.
Specific examples of the self-crosslinking group in the water-soluble (meth)acrylic resin B are the same as the specific examples of the self-crosslinking group in the specific (meth)acrylic resin particle A.
As the self-crosslinking group, at least one selected from the group consisting of an N-methylol group, an N-butylol group, and a glycidyl group is preferable.
Specific examples of the monomer having a self-crosslinking group in the water-soluble (meth)acrylic resin B are the same as the specific examples of the monomer having a self-crosslinking group in the specific (meth)acrylic resin particle A.
As the monomer having a self-crosslinking group, at least one selected from N-methylolacrylamide (NMAM) and hydroxyethylacrylamide (HEAA) is preferable.
In a case of containing a configurational unit derived from a monomer having a self-crosslinking group, the water-soluble (meth)acrylic resin B may contain only one type of the configurational unit derived from a monomer having a self-crosslinking group, or may contain two or more types thereof.
In a case where the water-soluble (meth)acrylic resin B contains the configurational unit derived from a monomer having a self-crosslinking group, the amount of the configurational unit derived from a monomer having a self-crosslinking group is not particularly limited, and is, for example, preferably 0.1 mass% to 10.0 mass%, more preferably 1.0 mass% to 5.0 mass%, and still more preferably 1.5 mass% to 2.0 mass% with respect to all configurational units of the water-soluble (meth)acrylic resin B.
When the amount of the configurational unit derived from a monomer having a self-crosslinking group in the water-soluble (meth)acrylic resin B is within the above-described range with respect to all configurational units of the water-soluble (meth)acrylic resin B, the formed adhesive coating tends to exhibit higher adhesion strength under high-temperature conditions when electrical steel sheets are firmly fixed to each other.

<Configurational Unit Derived From Monomer Having Hydroxy Group>

It is preferable that the water-soluble (meth)acrylic resin B contains a configurational unit derived from a monomer having a hydroxy group.
In the present disclosure, the "configurational unit derived from a monomer having a hydroxy group" means a configurational unit formed by addition polymerization of a monomer having a hydroxy group. Note that, in the present disclosure, a hydroxy group constituting part of a self-crosslinking group is not included among hydroxy groups in a monomer having a hydroxy group.
Examples of the monomer having a hydroxy group include monomers having, in one molecule, at least one hydroxy group and an ethylenically unsaturated group.
The ethylenically unsaturated group is not particularly limited, and examples thereof include a vinyl group, an allyl group, a vinylphenyl group, a (meth)acrylamide group, and a (meth)acryloyl group.

The ethylenically unsaturated group is preferably a (meth)acryloyl group.

Specific examples of the monomer having a hydroxy group include 2-hydroxyethyl (meth)acrylate, 2-hydroxypropyl (meth)acrylate, 3-hydroxypropyl (meth)acrylate, 4-hydroxybutyl (meth)acrylate, 6-hydroxyhexyl (meth)acrylate, 10-hydroxydecyl (meth)acrylate, 12-hydroxylauryl (meth)acrylate, 3-methyl-3-hydroxybutyl (meth)acrylate, 1,1-dimethyl-3-hydroxybutyl (meth)acrylate, 1,3-dimethyl-3-hydroxybutyl (meth)acrylate, 2,2,4-trimethyl-3-hydroxypentyl (meth)acrylate, 2-ethyl-3-hydroxyhexyl (meth)acrylate, glycerin mono(meth)acrylate, polypropylene glycol mono(meth)acrylate, polyethylene glycol mono(meth)acrylate, and poly(ethylene glycol-propylene glycol) mono(meth)acrylate.

As the monomer having a hydroxy group, a hydroxyalkyl (meth)acrylate is preferable, a hydroxyalkyl (meth)acrylate having a hydroxyalkyl group with 2 to 4 carbon atoms is more preferable, 2-hydroxyethyl (meth)acrylate is still more preferable, and 2-hydroxyethyl methacrylate is particularly preferable.

In a case of containing a configurational unit derived from a monomer having a hydroxy group, the water-soluble (meth)acrylic resin B may contain only one type of the configurational unit derived from a monomer having a hydroxy group, or may contain two or more types thereof.

In the case where the water-soluble (meth)acrylic resin B contains the configurational unit derived from a monomer having a hydroxy group, the amount of the configurational unit derived from a monomer having a hydroxy group is not particularly limited, and is, for example, preferably 5 mass% to 30 mass%, more preferably 10 mass% to 25 mass%, and still more preferably 15 mass% to 25 mass% with respect to all configurational units of the water-soluble (meth)acrylic resin B.

When the amount of the configurational unit derived from a monomer having a hydroxy group in the water-soluble (meth)acrylic resin B is 5 mass% or more with respect to all configurational units of the water-soluble (meth)acrylic resin B, external appearance, adhesion strength, and magnetic characteristics all tend to be excellent.

When the amount of the configurational unit derived from a monomer having a hydroxy group in the water-soluble (meth)acrylic resin B is 30 mass% or less with respect to all configurational units of the water-soluble (meth)acrylic resin B, the production stability of the water-soluble (meth)acrylic resin B tends to be more excellent.

<Configurational Unit Derived From Alkyl (Meth)Acrylate Monomer>

The water-soluble (meth)acrylic resin B preferably contains a configurational unit derived from an alkyl (meth)acrylate monomer.

Note that, the "alkyl (meth)acrylate monomer" excludes a monomer corresponding to a monomer having a self-crosslinking group, and a monomer corresponding to a monomer having a hydroxy group.

The type of the alkyl (meth)acrylate monomer is not particularly limited.

The alkyl (meth)acrylate monomer may be an alkyl acrylate monomer or may be an alkyl methacrylate monomer.

The alkyl group of the alkyl (meth)acrylate monomer may be unsubstituted or may have a substituent (provided that a carboxy group, a self-crosslinking group, and a hydroxy group are excluded), and is preferably unsubstituted.

The alkyl group of the alkyl (meth)acrylate monomer may be any of linear, branched, or cyclic.

The number of carbon atoms of the alkyl group of the alkyl (meth)acrylate monomer is, for example, preferably 1 to 12, more preferably 1 to 8, and still more preferably 1 to 4.

Specific examples of the alkyl (meth)acrylate monomer in the water-soluble (meth)acrylic resin B are the same as the specific examples of the alkyl (meth)acrylate monomer in the specific (meth)acrylic resin particle (A).

The alkyl (meth)acrylate monomer preferably contains, for example, at least one selected from the group consisting of n-butyl acrylate, methyl methacrylate, and ethyl acrylate from the viewpoint of water solubility, more preferably contains at least one selected from methyl methacrylate and ethyl acrylate, and still more preferably contains methyl methacrylate.

In a case of containing a configurational unit derived from an alkyl (meth)acrylate monomer, the water-soluble (meth)acrylic resin B may contain only one type of the configurational unit derived from an alkyl (meth)acrylate monomer, or may contain two or more types thereof.

In the case where the water-soluble (meth)acrylic resin B contains the configurational unit derived from an alkyl (meth)acrylate monomer, the amount of the configurational unit derived from an alkyl (meth)acrylate monomer is not particularly limited, and is, for example, preferably 40 mass% to 90 mass%, more preferably 40 mass% to 80 mass%, and still more preferably 40 mass% to 70 mass% with respect to all configurational units of the water-soluble (meth)acrylic resin B.

<Configurational Unit Derived From Other Monomer>

The water-soluble (meth)acrylic resin B may contain a configurational unit derived from a monomer (so-called other monomer) that does not correspond to any of a monomer having a self-crosslinking group, a monomer having a hydroxy group, and an alkyl (meth)acrylate monomer.

Examples of the configurational unit derived from other monomer include a configurational unit derived from a (meth)acrylate having an aromatic ring typified by benzyl (meth)acrylate and phenoxyethyl (meth)acrylate; a configurational unit derived from an alkoxyalkyl (meth)acrylate typified by methoxyethyl (meth)acrylate and ethoxyethyl (meth) acrylate; a configurational unit derived from a vinyl cyanide typified by acrylonitrile and methacrylonitrile; and a configurational unit derived from a vinyl ester typified by vinyl formate, vinyl acetate, vinyl propionate, and vinyl versatate.

In a case of containing the configurational unit derived from other monomer, the water-soluble (meth)acrylic resin B may contain only one type of the configurational unit derived from other monomer, or may contain two or more types thereof.

In the case where the water-soluble (meth)acrylic resin B contains the configurational unit derived from other monomer, the amount of the configurational unit derived from other monomer can be appropriately set within a range that does not impair the effects of the coating composition of the present disclosure.

<<Amount of Water-Soluble (Meth)Acrylic Resin B>>

The amount of the water-soluble (meth)acrylic resin B in the adhesive coating is preferably such that the ratio of the mass of the specific (meth)acrylic resin particle A to the mass of the water-soluble (meth)acrylic resin B [mass of specific (meth)acrylic resin particle A/mass of water-soluble (meth)acrylic resin B] is 95/5 to 85/15.

When the ratio of the mass of the specific (meth)acrylic resin particle A to the mass of the water-soluble (meth) acrylic resin B is 95/5 to 85/15, external appearance, adhesion strength, and magnetic characteristics all tend to be excellent. From these viewpoints, the ratio of the mass of the specific (meth)acrylic resin particle A to the mass of the water-soluble (meth)acrylic resin B is preferably 95/5 to 90/10.

[Other Components]

The adhesive coating may contain components other than the components described above (so-called other components) as necessary, within a range that does not impair the effects thereof.

Regarding the adhesive coating in the adhesive surface-coated electrical steel sheet or the laminated core obtained by laminating the adhesive surface-coated electrical steel sheets, the component ratio can be estimated by performing qualitative analysis of the contained components using infrared spectroscopy, nuclear magnetic resonance, or gas chromatography, and then performing weight distribution of fragments by TOFMS.

An analytical sample of the adhesive surface-coated electrical steel sheet can be collected by cutting out the coating portion with a precision cutter. In the case of the laminated core, several electrical steel sheets are peeled off from the laminated core, and the sample is then collected by the above-described method.

(Method For Manufacturing Adhesive Surface-Coated Electrical Steel Sheet)

(Method For Forming Adhesive Coating)

The adhesive surface-coated electrical steel sheet of the present disclosure exhibits the effects thereof as long as it has the above-described features regardless of the manufacturing method, and can be obtained, for example, by a manufacturing method including the following steps:

(I) a coating step of coating at least a part of one surface or both surfaces of an electrical steel sheet with an adhesive coating-forming coating liquid to obtain a coated steel sheet; and
(II) a coating film-forming step of heating the coated steel sheet at a heating rate of 6.0°C/sec or less to a drying temperature of 100°C to 200°C, retaining the coated steel sheet within a temperature range between -10°C from the drying temperature and the drying temperature for 10 to 60 seconds, and drying the coated steel sheet, to form an adhesive coating on the one surface or each of the both surfaces of the electrical steel sheet.

Note that, in the present disclosure, in a case where a plurality of substances corresponding to each component are present in the adhesive coating-forming coating liquid, the amount of each component in the adhesive coating-forming coating liquid means, unless otherwise specified, the total amount of the plurality of substances present in the adhesive coating-forming coating liquid.

Each step will be described.

-Coating Step-

In the coating step, a coated steel sheet is obtained by coating at least a part of one surface or both surfaces of an electrical steel sheet with an adhesive coating-forming coating liquid (hereinafter, also referred to as a "coating liquid of the present disclosure" or a "coating composition of the present disclosure").

The coating liquid (coating composition) of the present disclosure contains the (meth)acrylic resin particle A, the water-soluble (meth)acrylic resin B, and a medium containing water.

In the coating liquid of the present disclosure, the specific (meth)acrylic resin particle A is present in a state of being dispersed in the medium containing water.

In addition, the water-soluble (meth)acrylic resin B is present in a state of being dissolved in the medium containing water.

By coating with such a coating liquid and then drying, the above-described adhesive coating according to the present embodiment can be obtained.

[Water]

The coating liquid of the present disclosure contains water.

The type of water is not particularly limited.

As the water, for example, distilled water, deionized water (also referred to as "ion-exchanged water"), and pure water are preferable from the viewpoint of containing fewer impurities.

The water content in the coating liquid of the present disclosure is not particularly limited, and is, for example, preferably 35 mass% to 50 mass%, and more preferably 40 mass% to 45 mass%, with respect to the total mass of the coating composition.

[Other Components]

The coating liquid of the present disclosure may contain components other than the components described above (so-called other components) as necessary, within a range that does not impair the effects thereof.

Examples of the other components include an aqueous medium other than water.

Examples of the aqueous medium other than water include a water-miscible organic solvent.

Examples of the water-miscible organic solvent include organic solvents such as monohydric alcohol compounds such as methanol and ethanol; polyhydric alcohol compounds such as glycerin, ethylene glycol, and propylene glycol; and glycol derivatives such as ethylene glycol monoethyl ether and propylene glycol monobutyl ether.

In addition, examples of the other components include various additives such as a preservative, a wetting agent, and an antifoaming agent.

(Gel Fraction of Coating Composition)

In the coating liquid of the present disclosure, for example, a gel fraction at a temperature higher than the temperature at which crosslinking by the self-crosslinking group contained in the specific (meth)acrylic resin particle A proceeds is preferably larger than a gel fraction at a temperature lower than the temperature at which crosslinking by the self-crosslinking group contained in the specific (meth)acrylic resin particle A proceeds.

When the gel fraction of the coating liquid of the present disclosure satisfies the above-described requirements, the coating liquid of the present disclosure tends to be able to achieve both excellent coating onto a surface of the electrical steel sheet and formation of an adhesive coating that exhibits high adhesion strength under high-temperature conditions when the electrical steel sheets are bonded to each other, in a well-balanced manner.

The gel fraction of the coating liquid of the present disclosure is measured in the same manner as the method for measuring the gel fraction of the adhesive coating described above, except that the measurement target is the coating composition.

(Method for Manufacturing Coating Liquid)

A method for manufacturing the coating liquid (coating composition) of the present disclosure is not particularly limited.

The coating liquid of the present disclosure can be manufactured, for example, by mixing a dispersion of the specific (meth)acrylic resin particle A and an aqueous solution of the water-soluble (meth)acrylic resin B.

The mixing method is not particularly limited.

Examples of the mixing method include a method of mixing by stirring.

For the stirring, a general stirring instrument or a stirring device can be used.

The stirring temperature is not particularly limited, and is, for example, preferably 20°C to 30°C.

-Method for Forming Adhesive Coating -

In the coating film-forming step, the electrical steel sheet coated with the coating liquid (coated steel sheet) is heated at a heating rate of 6.0°C/sec or lower to a drying temperature (maximum temperature reached by the material) of 100°C to 200°C, and retained within a temperature range between (drying temperature - 10°C) and the drying temperature for 10 to 60 seconds, thereby carrying out drying, to form an adhesive coating on a surface of the electrical steel sheet.

The drying time (the time during which the material temperature is held within a temperature range between -10°C from the drying temperature and the drying temperature) is preferably 30 to 60 seconds. The temperature rising rate is calculated from the time until the drying temperature (maximum temperature reached by the material) is reached.

When the drying temperature is higher than 200°C, the curing reaction proceeds excessively, which may cause the adhesion strength to decrease. In addition, when the drying temperature is too high, the resin may be oxidized. When the drying temperature is lower than 100°C or the drying time is shorter than 10 seconds, drying is not sufficiently carried out.

When the drying time is longer than 60 seconds, the curing reaction proceeds excessively, which may cause the adhesion strength to decrease.

In addition, when the temperature rising rate is more than 6.0°C/sec, a film is not suitably formed, resulting in insufficient adhesion strength. In general, it is considered that decreasing the temperature rising rate necessitates increasing the furnace length or decreasing the line speed, which is unfavorable in terms of equipment constraints and productivity. However, in the method for manufacturing an adhesive surface-coated electrical steel sheet according to the present embodiment, the temperature rising rate is intentionally slowed down based on a new finding that the above-described effects can be obtained by slowing down the temperature rising rate.

Examples of the formation of the adhesive coating using the coating liquid of the present disclosure include a method of coating a surface of the electrical steel sheet with the coating liquid by a well-known coating method such as a roll coater method or a spray method, and then carrying out drying.

The solid content concentration of the coating liquid is preferably 5 to 40 mass%, and more preferably 10 to 25 mass%. The drying method is preferably a method utilizing a duplicate-type heating furnace, but may be a hot-blast furnace method or other methods.

[Laminated Core]

The laminated core of the present disclosure includes a plurality of the adhesive surface-coated electrical steel sheets of the present disclosure, the adhesive surface-coated electrical steel sheets are laminated, and the electrical steel sheets are bonded to each other by a cured film of the adhesive coating.

Here, the cured film of the adhesive coating is a film in which crosslinking of the (meth)acrylic resin particle A in the adhesive coating proceeds by heating and pressing the laminated adhesive surface-coated electrical steel sheets, followed by curing to develop adhesiveness.

Specifically, examples of the laminated core of the present disclosure include a laminated core produced by punching the adhesive surface-coated electrical steel sheets of the present disclosure to produce blanking members, and laminating and integrating the blanking members.

FIG. 2 is a schematic diagram illustrating an example of the laminated core of the present disclosure. As illustrated in FIG. 2, a laminated core 100 is formed as a laminated body 13 in which eight blanking members 11, each formed of the adhesive surface-coated electrical steel sheet, are connected in a ring shape, and the blanking members 11 connected in the ring shape are laminated into eight layers and integrated.

The blanking members 11, each formed of the adhesive surface-coated electrical steel sheet, are obtained by subjecting the adhesive surface-coated electrical steel sheets to punch processing, and includes an arcuate yoke portion 17 and a tooth portion 15 that protrudes radially inward from the inner circumferential surface of the yoke portion 17.

Note that the laminated core 100 is not limited to the shape, number of pieces, or number of laminated layers of the blanking members 11 forming the laminated core 100 illustrated in FIG. 2, and may be designed as appropriate depending on the intended purpose.

(Method for Manufacturing Laminated Core)

The laminated core of the present disclosure is manufactured, for example, by the following steps:

(III) a punching step of punching the adhesive surface-coated electrical steel sheet to obtain a blanking member;

(IV) a laminating step of laminating a plurality of the blanking members to obtain a laminated body; and

(V) a bonding step of heating the laminated body to a pressurizing temperature within a temperature range of 200°C to 300°C, retaining the laminated body within a range between -10°C from the pressurizing temperature and the pressurizing temperature for 30 to 60 minutes while applying a pressurizing force of 0.5 to 10 MPa.

Each step will be described.

-Punching Step-

In the punching step, an adhesive surface-coated electrical steel sheet is punched to obtain a member (blanking member) having a predetermined shape. The punching method is not particularly limited.

-Laminating Step-

In the laminating step, the blanking members are laminated with an adhesive coating sandwiched between the individual electrical steel sheets. Thus, a laminated body is obtained.

-Bonding Step-

In the bonding step, the laminated body is heated to a pressurizing temperature (maximum temperature reached by the material) within a range of 200°C to 300°C, and retained within a range between -10°C from the pressurizing temperature and the pressurizing temperature for 30 to 60 minutes while applying a pressurizing force of 0.5 to 10 MPa. As a result, the crosslinking of the (meth)acrylic resin particle A in the adhesive coating proceeds, thereby curing the adhesive coating. As a result, the cured film of the adhesive coating develops adhesiveness, and the electrical steel sheets are bonded to each other by the cured film of the adhesive coating.

Through these operations, the laminated core of the present disclosure is obtained.

The adhesive surface-coated electrical steel sheets may be bonded to each other in such a manner that the cured films of the adhesive coatings on the individual electrical steel sheets face and adhere to each other, or in such a manner that the cured film of the adhesive coating on one electrical steel sheet faces and adheres to a surface of another electrical steel sheet on which no adhesive coating is formed.

The pressurizing temperature is preferably 200°C to 300°C, the pressurizing force is preferably 0.5 to 10 MPa, and the holding time is preferably 30 to 60 minutes.

(Gel Fraction of Cured Film of Adhesive Coating)

In the laminated core of the present disclosure, the gel fraction of the cured film of the adhesive coating is preferably 70 mass% or more, more preferably 85 mass% or more, and still more preferably 85 mass% or more.

When the gel fraction of the cured film of the adhesive coating is within the above-described range, both adhesion strength and magnetic characteristics tend to be excellent.

Here, in a case where the gel fraction of the cured film of the adhesive coating is 70 mass% or more, it is preferable that the adhesive coating contains the (meth)acrylic resin particle A containing the configurational unit derived from a monomer having a (meth)acrylamide group as the monomer having a self-crosslinking group and the water-soluble (meth) acrylic resin B containing the configurational unit derived from a monomer having a hydroxy group.

The gel fraction of the cured film of the adhesive coating is measured by the same method as that used for the gel fraction of the adhesive coating of the adhesive surface-coated electrical steel sheet.

(Application of Laminated Core)

The laminated core of the present disclosure can be used as a core employed in a rotary electric machine and the like.

Examples

Hereinafter, the coating composition of the present disclosure will be described in more detail with reference to examples. The present disclosure is not limited to the following examples, as long as the spirit does not depart from the gist of the disclosure.

[Example 1]

1. Production of (Meth)Acrylic Resin Particle A

A stainless steel container was charged with 168 parts by mass of methyl methacrylate [MMA; alkyl methacrylate monomer], 56 parts by mass of n-butyl acrylate [n-BA; alkyl acrylate monomer], 128 parts by mass of styrene [St; other monomer], 40 parts by mass of methacrylic acid [MAA; monomer having a carboxy group], and 8 parts by mass of hydroxyethyl acrylamide [HEAA; monomer having a self-crosslinking group], followed by mixing to prepare a monomer mixture.

Next, 172.0 parts by mass of deionized water, 2.7 parts by mass of NOIGEN (registered trademark) EA-197D, nonionic surfactant [manufactured by Dai-ichi Kogyo Seiyaku Co., Ltd.], 4.1 parts by mass of EMULGEN (registered trademark) A-60 [manufactured by Kao Corporation], and 2.7 parts by mass of NEOPELEX, anionic surfactant (registered trademark) G-65 [manufactured by Kao Corporation] were added to another stainless steel container, followed by stirring to dissolve the mixture, thereby preparing a surfactant aqueous solution.

Next, the monomer mixture prepared as described above was gradually added to the surfactant aqueous solution while stirring with a stirrer to emulsify the mixture, thereby preparing a pre-emulsion. The prepared pre-emulsion was used for polymerization.

The polymerization was carried out in a 7 L (liter; hereinafter the same) flask equipped with a reflux condenser, a stirring device, a nitrogen gas inlet tube, a pump for dropwise addition of a pre-emulsion [trade name: Hi-Cera Pump V-10, manufactured by IWAKI Co., Ltd.], and a polymerization initiator feeding device [trade name: metering pump MP-2000, manufactured by Tokyo Rikakikai Co., Ltd.], in a thermostatic bath. Specifically, the polymerization was carried out as follows.

After charging the flask with 162.4 parts by mass of deionized water, a portion (17.5 parts by mass) of the pre-emulsion prepared as described above was added. Nitrogen gas was introduced into the flask at a flow rate of 300 ml/min, and while stirring at any rotation speed [standard condition: 240 rpm (revolutions per minute; the same applies to the following)], the internal temperature of the flask was raised to any reaction temperature (standard condition: 62°C). After the internal temperature was stabilized, 2.3 parts by mass of a 24 mass% ammonium persulfate aqueous solution [polymerization initiator] and 2.3 parts by mass of a 20 mass% sodium hydrogen sulfite aqueous solution [reducing agent] were added, and the flow rate of nitrogen gas was adjusted to 50 ml/min. After confirming the temperature rise inside the flask, the remaining pre-emulsion (564 parts by mass) was added dropwise over 270 minutes, and 63.4 parts by mass of a 2.4 mass% ammonium persulfate aqueous solution [polymerization initiator] and 63.4 parts by mass of a 2.0 mass% sodium hydrogen sulfite aqueous solution [reducing agent] were added dropwise over 360 minutes. After 30 minutes from the completion of dropwise addition of the ammonium peroxodisulfate aqueous solution and sodium hydrogen sulfite, 6.4 parts by mass of a 6.9 mass% t-butyl hydroperoxide aqueous solution [polymerization initiator] and 6.4 parts by mass of a 4.4 mass% sodium hydroxymethanesulfinate aqueous solution [reducing agent] were added dropwise over 30 minutes. The polymerization reaction was terminated by cooling to 30°C, 150 minutes after the completion of the dropwise addition of the pre-emulsion.

To the emulsion polymer obtained by the polymerization reaction were added 1.3 parts by mass of a preservative [trade name: Topcide 350, manufactured by Permachem Asia Ltd.] and 1.3 parts by mass of a wetting agent [trade name: SURFYNOL (registered trademark) 440, manufactured by Nissin Chemical Industry Co., Ltd.], thereby obtaining an aqueous dispersion of the (meth)acrylic resin particle A.

2. Production of Water-Soluble (Meth)Acrylic Resin B

A stainless steel container was charged with 126 parts by mass of methyl methacrylate [MMA; alkyl methacrylate monomer], 60 parts by mass of acrylic acid [AA; monomer having a carboxy group], 48 parts by mass of ethyl acrylate [EA; alkyl acrylate monomer], 60 parts by mass of 2-hydroxyethyl methacrylate [2HEMA; monomer having a hydroxy group], and 6 parts by mass of hydroxyethyl acrylamide [HEAA; monomer having a self-crosslinking group], followed by mixing to prepare a monomer mixture.

Next, 121.0 parts by mass of deionized water and 4.5 parts by mass of LATEMUL (registered trademark) E-118B, anionic surfactant [manufactured by Kao Corporation] were added to another stainless steel container, followed by stirring to dissolve the mixture, thereby preparing a surfactant aqueous solution.

Next, the monomer mixture prepared as described above was gradually added to the surfactant aqueous solution while stirring with a stirrer to emulsify the mixture, thereby preparing a pre-emulsion. The prepared pre-emulsion was used for polymerization.

The polymerization was carried out in a 7 L flask equipped with a reflux condenser, a stirring device, a nitrogen gas inlet tube, a pump for dropwise addition of a pre-emulsion [trade name: Hi-Cera Pump V-10, manufactured by IWAKI Co., Ltd.], and a polymerization initiator feeding device [trade name: metering pump MP-2000, manufactured by Tokyo Rikakikai Co., Ltd.], in a thermostatic bath. Specifically, the polymerization was carried out as follows.

A flask was charged with 415 parts by mass of deionized water and 7.0 parts by mass of LATEMUL (registered trademark) E-118B, anionic surfactant [manufactured by Kao Corporation], followed by the addition of a portion (8.5 parts by mass) of the pre-emulsion prepared as described above. Nitrogen gas was introduced into the flask at a flow rate of 300 ml/min, and while stirring at any rotation speed [standard condition: 150 rpm], the internal temperature of the flask was raised to any reaction temperature [standard condition: 60°C]. Then, 1.0 part by mass of a 69.0 mass% t-butyl hydroperoxide aqueous solution [polymerization initiator] and 2.5 parts by mass of a 10.0 mass% sodium hydroxymethanesulfinate aqueous solution [reducing agent] were added. After the internal temperature was stabilized, the flow rate of nitrogen gas was adjusted to 50 ml/min. After the adjustment, the remaining pre-emulsion (456.6 parts by mass) was added dropwise over 180 minutes, together with 24.5 parts by mass of a 6.9 mass% t-butyl hydroperoxide aqueous solution [polymerization initiator], 24.5 parts by mass of a 1.2 mass% sodium hydroxymethanesulfinate aqueous solution [reducing agent], and 39.6 parts by mass of a 14.7 mass% 2-mercaptoethanol [chain transfer agent], thereby obtaining an aqueous dispersion of (meth)acrylic resin particles. To the obtained aqueous dispersion of (meth)acrylic resin particles was added 58 parts by mass of 25.0 mass% aqueous ammonia (basic aqueous solution) to dissolve the (meth)acrylic resin particles in water, thereby obtaining an aqueous solution of the water-soluble (meth)acrylic resin B.

3. Production of Coating Liquid (Coating Composition)

After mixing 300.0 parts by mass (137.1 parts by mass as a solid content) of the aqueous dispersion containing the (meth)acrylic resin particles A with 48.1 parts by mass (15.2 parts by mass as a solid content) of the aqueous solution of the water-soluble (meth)acrylic resin B, an appropriate amount of deionized water was added to obtain a coating liquid having a solid content concentration of 43.5 mass%.

Here, the "solid content concentration" refers to the total mass ratio of the (meth)acrylic resin particles A and the water-soluble (meth)acrylic resin B in the coating composition. The same applies to the coating liquid produced in the following.

4. Production of Adhesive Surface-Coated Electrical Steel Sheet

First, a non-oriented electrical steel sheet having a thickness of 0.25 mm and a width of 100 mm was prepared, with compositions of Si: 3.0 mass%, Mn: 0.2 mass%, Al: 0.5 mass%, and a remainder composed of Fe and impurities.

Next, the obtained coating liquid was applied over the entirety of one surface of the electrical steel sheet, and the electrical steel sheet was then heated in a heating furnace for 3 minutes to dry the coating film. Note that, during heating, the electrical steel sheet was heated until the temperature reached by the steel sheet surface (heating temperature) was within a range of 140°C or higher and 170°C or lower, and the electrical steel sheet was further retained at the reached temperature for 30 seconds. Thereafter, the electrical steel sheet was cooled to room temperature at a cooling rate of 2.5°C/sec to form an adhesive coating having a thickness of 2.5 $\mu$m.

In this way, an adhesive surface-coated electrical steel sheet was obtained.

[Examples 2 to 9 and Comparative Examples 1 to 7]

A coating composition having a solid content concentration of 43.5 mass% was obtained by performing the same operations as in Example 1, except that the monomer compositions of the (meth)acrylic resin particle A and the water-soluble (meth)acrylic resin B were changed to the monomer compositions illustrated in Table 1, respectively, and the mass ratio [A/B] of the (meth)acrylic resin particle A to the water-soluble (meth)acrylic resin B was changed to the mass ratio illustrated in Table 1.

Then, the obtained coating liquid was used to obtain an adhesive surface-coated electrical steel sheet in the same manner as in Example 1. However, the heating temperature of the coating film, the heating temperature, and the cooling rate were adjusted in such a manner that the gel fraction of the adhesive coating was the values illustrated in Table 1.

Note that, in Comparative Example 5, a coating composition that does not include the specific (meth)acrylic resin particle A was obtained.

In addition, in Comparative Example 6, a coating composition that does not include the water-soluble (meth) acrylic resin B was obtained.

[Comparative Example 7]

An adhesive surface-coated electrical steel sheet was obtained in the same manner as in Example 1, except that an epoxy resin composition obtained by mixing a latent curing agent with bisphenol A and epichlorohydrin was used as a coating liquid.

However, heating of the coating film of the epoxy resin composition was performed at a reached temperature of 170°C on the steel sheet surface, and the average thickness of the adhesive coating was 6 μm.

[Evaluation]

(Gel fraction)

The gel fraction of the adhesive coating in the adhesive surface-coated electrical steel sheet of each example was measured according to the method described above.

Two single-sheet test pieces each having a size of 60 mm × 60 mm were cut out from the adhesive surface-coated electrical steel sheet of each example. Then, the two single-sheet test pieces were overlapped with each other in such a manner that the adhesive coatings faced each other. The overlapped body was heated and pressed under conditions of a steel sheet temperature of 250°C, a pressure of 3 MPa, and a heating and pressing time of 60 minutes to obtain a laminated body sample. The gel fraction of the cured film of the adhesive coating in the laminated sample was measured according to the method described above.

(Adhesion Strength)

Two single-sheet test pieces each having a size of 30 mm × 60 mm were cut out from the adhesive surface-coated electrical steel sheet of each example. The 30 mm × 10 mm end portions of the two single-sheet test pieces were overlapped with each other in such a manner that the adhesive coatings faced each other. The two single-sheet test pieces overlapped were heated and pressed under conditions of a pressurizing temperature of 250°C, a pressure of 2 MPa, and a holding (heating and pressing) time of 1 minute to obtain an adhesive sheet for measuring adhesion strength.

The shear adhesion strength was measured as follows, with the steel sheet temperature at ambient temperature (25°C). A sample for measuring the adhesion strength was attached to a tensile tester, and the shear adhesion strength was measured at a tensile speed of 50 mm/min.

Then, a value obtained by dividing the measured shear adhesion strength value by the adhesion area of the two single-sheet test pieces was determined as the adhesion strength at ambient temperature.

It was determined that an adhesive strength of 6 MPa or more indicates sufficient adhesive strength.

In addition, two single-sheet test pieces each having a size of 30 mm × 60 mm were separately cut out from the adhesive surface-coated electrical steel sheet of each example, and the 30 mm × 10 mm end portions thereof were overlapped with each other in such a manner that the adhesive coatings faced each other. The two single-sheet test pieces overlapped were placed in an atmosphere of 150°C, and the shear adhesion strength was measured under the same conditions as in the case of the ambient temperature, with the steel sheet temperature at 150°C.

Then, a value obtained by dividing the measured shear adhesion strength value by the adhesion area of the two single-sheet test pieces was determined as an adhesion strength at 150°C.

It was determined that an adhesive strength of 0.5 MPa or more indicates sufficient adhesive strength.

In addition, two single-sheet test pieces each having a size of 30 mm × 60 mm were further separately cut out from the adhesive surface-coated electrical steel sheet of each example, and the 30 mm × 10 mm end portions thereof were overlapped with each other in such a manner that the adhesive coatings faced each other. The two single-sheet test pieces overlapped were left to stand in an atmosphere with a temperature of 50°C and a humidity of 85% for one week. Thereafter, the shear adhesion strength was measured under the same conditions as in the case of the ambient temperature, with the steel sheet temperature at ambient temperature (25°C).

Then, a value obtained by dividing the measured shear adhesion strength value by the adhesion area of the two single-sheet test pieces was determined as the adhesion strength at ambient temperature after aging.

It was determined that an adhesive strength of 5.5 MPa or more indicates sufficient adhesive strength.

(Magnetic Characteristics)

Single-sheet test pieces each having a size of 55 mm × 55 mm were cut out from the adhesive surface-coated electrical steel sheet of each example. Then, the two single-sheet test pieces were overlapped with each other in such a manner that the adhesive coatings faced each other. The overlapped body was heated and pressed under conditions of a pressurizing temperature of 250°C, a pressure of 2 MPa, and a holding (heating and pressing) time of 1 minute to obtain a laminated body sample.

Core losses in a rolling direction and an orthogonal-to-rolling direction in the obtained laminated sample were measured by methods of measurement of magnetic characteristics of a single steel sheet specified in JIS C2556:2015, and an average value of core losses W10/400 in the rolling direction and the orthogonal-to-rolling direction was determined.

It was determined that an iron loss of 10.9 W/kg or less indicates excellent magnetic characteristics.

(External Appearance)

Three 5 mm square test pieces were cut out from the adhesive surface-coated electrical steel sheet of each example to obtain the test pieces.

The surface of the adhesive coating of each test piece was observed at three locations with a scanning electron microscope at a magnification of 100 times. The observation was performed for a total of 9 fields of view.

Then, evaluation was performed according to the following evaluation criteria, and A and B were determined as a pass.

A: No coating defects such as cracks, fissures, or peeling were observed at all.
B: The area ratio of coating defects was 10% or less.
C: The area ratio of coating defects was more than 10% and less than 30%.
D: The area ratio of coating defects was 30% or more.

The details of the abbreviations of each monomer described in Table 1 are as shown below.

<Monomer Having Self-Crosslinking Group>

"NMAM": N-methylolacrylamide
"NBMA": N-butylol acrylamide

<Monomer Having Self-Crosslinking Group and Hydroxy Group>

"HEAA": Hydroxyethyl acrylamide

<Monomer Having Carboxy Group>

"MAA": Methacrylic acid
"AA": Acrylic acid

<Monomer Having Hydroxy Group>

"2HEMA": 2-Hydroxyethyl methacrylate

<Alkyl (Meth)Acrylate Monomer>

"n-BA": n-Butyl acrylate
"MMA": Methyl methacrylate
"2EHA": 2-Ethylhexyl acrylate
"EA": Ethyl acrylate

<Other Monomer>

"St": Styrene

In Table 1, blank spaces described in the columns of the monomer compositions mean that monomers corresponding to the columns are not used.

In Table 1, the numerical values described in the columns of the monomer compositions are all values on a solid-content basis (parts by mass).

[Table 1]

| | Monomer | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| (Meth) acrylic resin particle A | MMA | 168 | 140 | 168 | 168 | 164 | 220 | 168 | 168 | 168 | 168 | 168 | 220 | 168 | | 144 |
| | n-BA | 56 | | 56 | 56 | | 40 | 56 | 56 | 56 | | | 40 | 56 | | 80 |
| | St | 128 | 128 | 128 | 128 | 128 | 128 | 128 | 128 | 128 | 136 | 136 | 128 | 128 | | 128 |
| | MAA | 40 | 40 | 40 | 40 | 40 | 4 | 40 | 40 | 40 | 40 | 40 | 4 | 40 | | 40 |
| | 2EHA | | 84 | | | 60 | | | | | 40 | 48 | | | | |
| | HEAA | 8 | 8 | | 8 | | 8 | 8 | | | | | 8 | 8 | | 8 |
| | NMAM | | | | | 8 | | | 8 | | | | | | | |
| | NBMA | | | 8 | | | | | | 8 | 16 | 8 | | | | |
| Water-soluble (meth) acrylic resin B | MMA | 126 | 126 | 126 | 126 | 69 | 126 | 126 | 126 | 126 | 126 | 126 | 126 | 126 | 126 | |
| | n-BA | | | | | 60 | | 60 | | | | | | | | |
| | AA | 60 | 60 | 60 | 60 | 105 | 60 | 60 | 60 | 60 | 60 | 60 | 60 | 60 | 60 | |
| | EA | 48 | 48 | 48 | 48 | | 48 | 54 | 48 | 48 | 48 | 48 | 48 | 48 | 48 | |
| | 2HEMA | 60 | 60 | 60 | 60 | 60 | 60 | | 60 | 60 | 60 | 60 | 60 | 60 | 60 | |
| | NMAM | | | | | | | | | | | | | | | |
| | HEAA | 6 | 6 | 6 | 6 | 6 | 6 | | 6 | 6 | 6 | 6 | 6 | 6 | 6 | |
| Mass ratio of A : B | | 90: 10 | 90: 10 | 95: 5 | 85 : 15 | 90 : 10 | 75 : 25 | 90 : 10 | 97 : 3 | 80 : 20 | 65 : 35 | 70 : 30 | 90 : 10 | 95 : 5 | 0 : 100 | 100 : 0 |

[Table 2]

| | Gel fraction of adhesive coating (mass%) | Gel fraction of cured film of adhesive coating (mass%) | External appearance | Adhesion strength (MPa) | | | Magnetic characteristic iron loss (W/kg) |
|---|---|---|---|---|---|---|---|
| | | | | Ambient temperature | 150°C | Ambient temperature after aging | W10/400 |
| Example 1 | 50 | 85 | B | 12 | 4 | 10 | 10.5 |
| Example 2 | 50 | 90 | A | 10 | 2 | 9.3 | 10.4 |
| Example 3 | 70 | 85 | B | 12 | 3 | 11 | 10.7 |
| Example 4 | 60 | 80 | B | 6 | 4.5 | 5.6 | 10.3 |
| Example 5 | 50 | 80 | B | 8 | 3.5 | 7.5 | 10.9 |
| Example 6 | 30 | 70 | B | 12 | 2 | 11.2 | 10.8 |
| Example 7 | 70 | 85 | B | 7 | 2.2 | 6.5 | 10.8 |
| Example 8 | 60 | 75 | B | 10 | 4 | 8 | 10.9 |
| Example 9 | 60 | 75 | B | 8 | 5 | 6 | 10.9 |
| Comparative Example 1 | 85 | 90 | B | 6 | 0.4 | 4.9 | 111 |
| Comparative Example 2 | 75 | 85 | B | 16 | 1.2 | 13.5 | 12.8 |
| Comparative Example 3 | 20 | 50 | C | 13 | 9.3 | 4.3 | 12.1 |
| Comparative Example 4 | 10 | 40 | B | 4 | 2.2 | 3.8 | 10.8 |
| Comparative Example 5 | 80 | 98 | B | 11 | 0.3 | 4.9 | 11.4 |
| Comparative Example 6 | 60 | 95 | D | 7.3 | 4.4 | 4 | 10.7 |
| Comparative Example 7 | - | - | B | 14 | 1 | 4.1 | 12.6 |

From the above-described results, it can be seen that in the present examples, the external appearance, the adhesion strength after high-temperature storage, and the magnetic characteristics are all excellent as compared with the comparative examples.

INDUSTRIAL APPLICABILITY

According to the above-described aspects of the present disclosure, provided are the adhesive surface-coated electrical steel sheet having excellent adhesion strength at ambient temperature and a high temperature, excellent adhesion strength after high-temperature storage, and excellent magnetic characteristics, the laminated core using the same, and the methods for manufacturing those.

REFERENCE SIGNS LIST

10 Adhesive surface-coated electrical steel sheet (electrical steel sheet with adhesive coating)
10A Electrical steel sheet
10B Adhesive coating

10C Adhesive coating
11 Blanking member formed of adhesive surface-coated electrical steel sheet
100 Laminated core

**Claims**

1. An adhesive surface-coated electrical steel sheet comprising:

    an electrical steel sheet; and
    an adhesive coating provided on at least a part of one surface or both surfaces of the electrical steel sheet, wherein
    the adhesive coating includes
    a (meth)acrylic resin particle A containing a configurational unit derived from a monomer having a self-crosslinking group, and a water-soluble (meth)acrylic resin B, and
    a gel fraction of the adhesive coating is more than 20 mass% and 70 mass% or less.

2. The adhesive surface-coated electrical steel sheet according to claim 1, wherein the water-soluble (meth)acrylic resin B is a (meth)acrylic resin containing a configurational unit derived from a monomer having a self-crosslinking group.

3. The adhesive surface-coated electrical steel sheet according to claim 1, wherein a ratio of a mass of the (meth)acrylic resin particle A to a mass of the water-soluble (meth)acrylic resin B is 95/5 to 85/15.

4. The adhesive surface-coated electrical steel sheet according to claim 1, wherein the self-crosslinking group is one or more of an N-methylol group, an N-butylol group, a glycidyl group, and an alkoxymethylamide group.

5. A laminated core comprising a plurality of the adhesive surface-coated electrical steel sheets according to any one of claims 1 to 4, the adhesive surface-coated electrical steel sheets being laminated, wherein the electrical steel sheets are bonded to each other by a cured film of the adhesive coating.

6. The laminated core according to claim 5, wherein the adhesive coating contains the (meth)acrylic resin particle A containing a configurational unit derived from a monomer having a (meth)acrylamide group as the monomer having a self-crosslinking group and the water-soluble (meth)acrylic resin B containing a configurational unit derived from a monomer having a hydroxy group, and a gel fraction of the cured film of the adhesive coating is 70 mass% or more.

7. A method for manufacturing the adhesive surface-coated electrical steel sheet according to claim 1, the method comprising:

    a coating step of coating at least a part of one surface or both surfaces of an electrical steel sheet with an adhesive coating -forming coating liquid containing a (meth)acrylic resin particle A containing a configurational unit derived from a monomer having a self-crosslinking group and a water-soluble (meth)acrylic resin B to obtain a coated steel sheet; and
    a coating film-forming step of heating the coated steel sheet to a drying temperature of 100°C to 200°C at a heating rate of 6.0°C/sec or less, retaining the coated steel sheet within a temperature range between -10°C from the drying temperature and the drying temperature for 10 to 60 seconds, and drying the coated steel sheet, to form an adhesive coating on the one surface or each of the both surfaces of the electrical steel sheet.

8. The method for manufacturing an adhesive surface-coated electrical steel sheet according to claim 7, wherein in the adhesive coating-forming coating liquid, a ratio of a mass of the (meth)acrylic resin particle A to a mass of the water-soluble (meth)acrylic resin B is 95/5 to 85/15.

9. A method for manufacturing the laminated core according to claim 5, the method comprising:

    a punching step of punching the adhesive surface-coated electrical steel sheet to obtain a blanking member;
    a laminating step of laminating a plurality of the blanking members to obtain a laminated body; and
    a bonding step of heating the laminated body to a pressurizing temperature within a temperature range of 200°C to 300°C, retaining the laminated body within a range between -10°C from the pressurizing temperature and the pressurizing temperature for 30 to 60 minutes while applying a pressurizing force of 0.5 to 10 MPa, and curing the adhesive coating, to form the cured film.

FIG. 1

FIG. 2

## INTERNATIONAL SEARCH REPORT

| International application No. |
|---|
| **PCT/JP2024/034404** |

### A. CLASSIFICATION OF SUBJECT MATTER

*C23C 26/00*(2006.01)i; *B32B 7/025*(2019.01)i; *B32B 15/08*(2006.01)i; *H01F 1/147*(2006.01)i; *H01F 27/245*(2006.01)i; *H01F 41/02*(2006.01)i; *H02K 1/18*(2006.01)i; *C21D 8/12*(2006.01)n
FI: C23C26/00 A; B32B7/025; B32B15/08 P; H01F1/147 183; H01F27/245; H01F41/02 B; H02K1/18 B; C21D8/12 A

According to International Patent Classification (IPC) or to both national classification and IPC

### B. FIELDS SEARCHED

Minimum documentation searched (classification system followed by classification symbols)

C23C26/00; B32B7/025; B32B15/08; H01F1/147; H01F27/245; H01F41/02; H02K1/18; C21D8/12 A

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 04-218677 A (NIPPON STEEL CORPORATION) 10 August 1992 (1992-08-10) | 1-9 |
| A | JP 03-240970 A (NIPPON STEEL CORPORATION) 28 October 1991 (1991-10-28) | 1-9 |
| A | JP 03-232976 A (NIPPON STEEL CORPORATION) 16 October 1991 (1991-10-16) | 1-9 |
| A | JP 07-166365 A (NIPPON STEEL CORPORATION) 27 June 1995 (1995-06-27) | 1-9 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **02 December 2024** | **10 December 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

| International application No. |
|---|
| **PCT/JP2024/034404** |

| Patent document cited in search report | | | Publication date (day/month/year) | Patent family member(s) | Publication date (day/month/year) |
|---|---|---|---|---|---|
| JP | 04-218677 | A | 10 August 1992 | (Family: none) | |
| JP | 03-240970 | A | 28 October 1991 | (Family: none) | |
| JP | 03-232976 | A | 16 October 1991 | (Family: none) | |
| JP | 07-166365 | A | 27 June 1995 | (Family: none) | |

Form PCT/ISA/210 (patent family annex) (July 2022)

**EP 4 786 642 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023163617 A
- WO 2004070080 A
- JP 2023508140 A
- WO 2016017132 A
- JP 2018518591 A
- JP 2017179233 A